# FASCICULE DE BREVET EUROPEEN

(11) **EP 3 442 169 B1**
(45) Date de publication et mention de la délivrance du brevet: **20.04.2022**
(21) Numéro de dépôt: 18198270.3
(22) Date de dépôt: 14.12.2012
(51) Int. Cl.: H04L 12/28

(54) **SYSTÈME DE CONTRÔLE POUR JOUER UN FLUX DE DONNÉES SUR UN DISPOSITIF RÉCEPTEUR**
KONTROLLSYSTEM ZUM ABSPIELEN EINES DATENFLUSSES AUF EINEM EMPFANGSGERÄT
CONTROL SYSTEM FOR PLAYING BACK A DATA STREAM ON A RECEIVER DEVICE

(30) Priorité: 23.12.2011 FR 1162444
(43) Date de publication de la demande: 13.02.2019
(62) Demande divisionnaire de: 16161246.0
(73) Titulaire: ORANGE, 92130 Issy-les-Moulineaux (FR)
(72) Inventeur: CAZOULAT, Renaud, 923269 CHATILLON (FR); CONAN, Martin, 92326 CHATILLON (FR); CAPDEVIELLE, Marc, 92326 CHATILLON (FR)

(56) Documents cités:
- EP-A1- 1 819 101
- US-A1- 2006 117 371
- US-A1- 2011 131 520

## Description

La présente invention concerne un système de contrôle pour jouer un flux de données.

Les boitiers de décodage vidéo numériques, couramment appelés Set-Top-Box (STB), permettent d'accéder à des contenus vidéo tels des programmes télévisuels ou des contenus vidéos de type VOD (Video On Demand - Vidéo à la demande), à travers un réseau de transmission numérique (par Internet, satellite ou TNT par exemple).

Les STB peuvent en outre intégrer d'autres fonctions :
- un disque dur permettant d'enregistrer un programme durant une plage horaire prédéfinie ou à la volée afin de permettre à un utilisateur de mettre le programme TV courant en pause et de le visionner ultérieurement ;
- un accès à l'Internet ;
- un service de diffusion de radio Web ;
- un support DLNA permettant de naviguer dans un gestionnaire de fichiers d'un ordinateur jouant un rôle de serveur DLNA et de jouer un contenu stocké sur l'ordinateur ;
- etc.

Ces nombreuses fonctions rendent complexe l'utilisation de la STB. Pour utiliser une fonction, un utilisateur doit naviguer dans une interface graphique s'affichant sur l'écran d'un téléviseur à l'aide d'une télécommande spécifique. Compte tenu des contraintes de lisibilité induites par l'affichage sur un écran TV et des contraintes liées à l'utilisation d'une télécommande pour naviguer dans l'interface graphique, celle-ci manque souvent de simplicité et de confort d'utilisation. En outre, toutes ces fonctions augmentent le coût de la STB.

Il est prévu dans le document publié sous le numéro EP 1819101 A1 un système de fourniture de contenus au sein d'un réseau domestique, en particulier d'un contenu à diffuser, obtenu au préalable à l'extérieur de ce réseau domestique, par un serveur média de ce réseau domestique, ou alternativement stocké sur un serveur local. Un point de contrôle (control point) commande à un dispositif de streaming *(media renderer*) de jouer un flux présent sur le serveur. Cependant un tel système, s'insérant dans une architecture bien connue de type UPnP, ne permet pas de sélectionner un contenu depuis un dispositif de contrôle, de le vérifier, et d'en transmettre l'adresse au dispositif de streaming (STB) via une commande.

Il est prévu par ailleurs dans le document publié sous le numéro US 2011131520 A1 un système de transfert de contenu média, au sein d'un réseau domestique, d'un terminal mobile vers un dispositif de restitution. Cependant un tel système ne permet pas davantage de sélectionner un contenu depuis un dispositif de contrôle, de le vérifier, et d'en transmettre l'adresse au dispositif de streaming (STB) via une commande.

La présente invention vise à améliorer la situation.

A cet effet, elle concerne un système de contrôle pour jouer un flux de données.

Un mode de réalisation est détaillé à l'appui de la revendication indépendante 1 et de ses dépendantes. D'autres modes de réalisation sont fournis à titre d'exemple.

L'invention consiste donc à séparer les moyens d'interface utilisateur permettant de sélectionner le flux à jouer et les moyens pour gérer le flux de données (c'est-à-dire pour le recevoir et le retransmettre vers un dispositif apte à le jouer) dans deux dispositifs distincts, un dispositif de contrôle et un dispositif récepteur respectivement. Le dispositif de contrôle obtient l'adresse de localisation du flux à jouer et la transmet au dispositif récepteur qui n'a plus qu'à récupérer le flux à l'adresse fournie. Le dispositif de contrôle peut offrir une interface utilisateur conviviale, sans les contraintes d'affichage et de navigation sur un écran de téléviseur. En outre, le dispositif récepteur peut être techniquement le plus simple possible, sans moyens d'interface utilisateur pour sélectionner le flux à jouer, ce qui limite son coût. Selon l'invention, toute l'interactivité entre l'utilisateur et l'interface utilisateur pour sélectionner le flux est réalisée au niveau du dispositif de contrôle. Les moyens d'interface utilisateur sont avantageusement agencés pour accéder à une interface utilisateur de sélection au moins, ladite interface de sélection permettant d'accéder à un contenu stocké sur un dispositif de stockage

L'invention concerne aussi un dispositif de contrôle pour le système précédemment défini.

L'invention concerne encore un procédé de contrôle pour jouer un flux de données. Un mode de réalisation est détaillé à l'appui de la revendication indépendante 11 et de ses dépendantes. D'autres modes de réalisation sont fournis à titre d'exemple.

L'invention sera mieux comprise à l'aide de la description suivante d'une forme de réalisation particulière du système de contrôle de l'invention en référence aux dessins annexés sur lesquels
- La figure 1 représente une vue schématique du système selon une forme de réalisation particulière de l'invention ;
- La figure 2 représente un schéma bloc fonctionnel du dispositif récepteur du système de la figure 1 ;

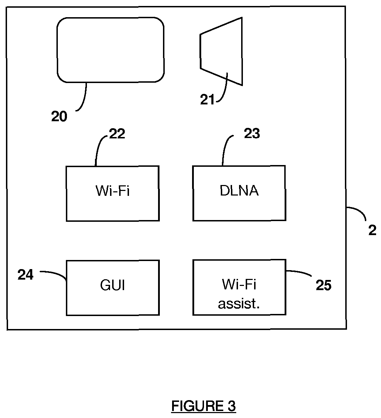

- La figure 3 représente un schéma bloc fonctionnel du dispositif de contrôle du système de la figure 1
- La figure 4 représente un organigramme des étapes de procédé mises en oeuvre pour connecter le dispositif récepteur de la figure 1 à une passerelle ;
- Les figures 5A et 5B représentent les étapes de procédé mises en oeuvre lors du fonctionnement du système de la figure 1, selon deux exemples de réalisation particuliers.

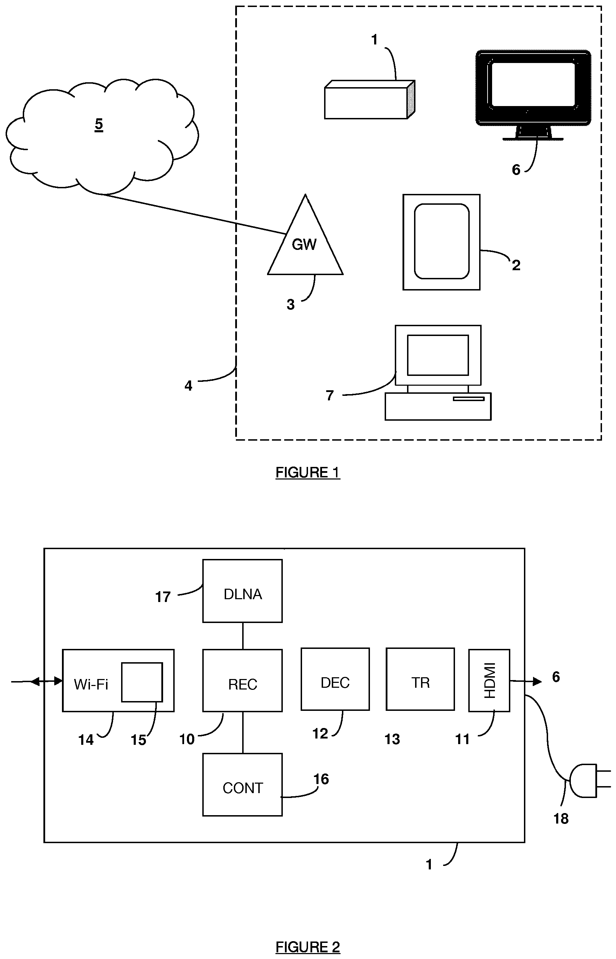

Le système représenté sur la figure 1 comprend un premier dispositif 1, dit récepteur, et un deuxième dispositif 2, dit de contrôle, distincts l'un de l'autre.

Le dispositif récepteur 1 et le dispositif de contrôle 2 appartiennent à un réseau local 4 géré par une passerelle 3, en l'espèce un point d'accès WI-Fi.

La passerelle 3 est connectée à un réseau externe de communication, ici l'Internet 5, par exemple par l'intermédiaire d'une ligne ADSL *(Asymmetric Digital Subscriber Line* - *liaison numérique asymétrique).*

Le réseau local 4 comprend également un ordinateur personnel, ou PC (Personal Computer), 7 et un dispositif de restitution multimédia 6, par exemple ici un téléviseur à écran plat.

Le dispositif récepteur 1, le dispositif de contrôle 2 et l'ordinateur 7 sont connectés à la passerelle 3, par une liaison sans fil, ici une liaison Wi-Fi. On pourrait envisager une connexion filaire entre les appareils du réseau local 4 (1, 2 et/ou 7) et la passerelle 3. Le dispositif récepteur 1 est connecté au dispositif de restitution multimédia 6, ici par des connecteurs HDMI.

Le dispositif récepteur 1, le dispositif de contrôle 2, le dispositif de restitution multimédia 6 et le PC 7 forment un réseau local DLNA. Le standard DLNA (Digital Living Network Alliance) définit différents acteurs :
- le serveur : stocke et fournit à la demande les contenus numériques ;
- le « renderer » : décode les contenus numériques pour pouvoir les jouer ;
- le « player » : joue les contenus décodés ;
- le contrôleur : permet de parcourir les contenus proposés par les serveurs et de les faire jouer par les renderers/players.

Dans l'exemple particulier décrit ici, des acteurs DLNA sont installés sur les appareils du réseau DLNA de la façon suivante :
- le dispositif récepteur 1 joue un rôle de renderer DLNA ;
- le dispositif de contrôle 2 joue un rôle de renderer/player DLNA, de serveur DLNA et de contrôleur DLNA ;
- le PC 7 joue un rôle de serveur DLNA et
- le dispositif de restitution multimédia 6 joue un rôle de player DLNA.

On va maintenant décrire de façon plus détaillée le dispositif récepteur 1. En référence à la figure 2, ce dispositif récepteur 1 comprend
- un module 10 de réception d'un flux de données à jouer,
- une interface de sortie 11 vers un dispositif externe apte à jouer le flux reçu ;
- un module 12 de décodage du flux de données reçu ;
- un module 13 de retransmission du flux de données, reçu et décodé, à travers l'interface de sortie 11 ;
- un module de communication sans fil, ici Wi-Fi, 14, intégrant un sous-module 15 de connexion Wi-Fi à un point d'accès WI-Fi ;
- un module 16 de contrôle de réception d'un flux de données; et
- un module DLNA 17.

Le module de contrôle 16 est agencé pour, sur réception d'un message de commande en provenance d'un dispositif de contrôle (par exemple le dispositif de contrôle 2), interpréter le message de commande et transmettre au module de réception 10 une commande pour récupérer un flux de données à jouer à une adresse de localisation indiquée dans le message de commande. Il peut s'agir d'une adresse sous la forme d'une URL, comportant une adresse IP multicast (dans le cas d'un flux TV), une adresse IP unicast (dans le cas d'un flux de VOD), d'une adresse de stockage sur un serveur ou un dispositif de stockage (dans le cas d'un contenu stocké dans un serveur local ou distant).

Le module de réception 10 est agencé pour, sur réception d'une commande pour récupérer un flux de données, la commande contenant une adresse de localisation du flux, récupérer le flux considéré à l'adresse de localisation reçue.

Le module de décodage 12, connecté en entrée au module de réception 10 et en sortie au module de retransmission 13, est agencé pour décoder un flux de données reçu par le module de réception 10 de manière à ce qu'il puisse être joué par un dispositif de restitution externe apte à jouer le contenu, par exemple le dispositif de restitution multimédia 6. Le décodage comprend un déchiffrement du flux, si celui-ci est sous forme chiffrée, une décompression du flux, si celui-ci est sous forme compressée, et une conversion de format afin de convertir le format des données du flux reçu en un format compatible avec l'interface de sortie vidéo (ici HDMI - High Definition Multimedia Interface).

Le module de retransmission 13, connecté en entrée au module de décodage 12 et en sortie à l'interface de sortie 11, est agencé pour retransmettre un flux de données à jouer, après décodage, à travers l'interface de sortie 11, vers un dispositif externe apte à jouer, c'est-à-dire à restituer, le flux. Ce dispositif externe peut par exemple être le dispositif de restitution multimédia 6.

L'interface de sortie 11 comprend ici un connecteur HDMI (High-Definition Multimedia Interface) mâle.

Le module de communication Wi-Fi 14 est agencé pour mettre en oeuvre le protocole de communication Wi-Fi afin de communiquer en Wi-Fi avec d'autres dispositifs. Le sous-module de connexion Wi-Fi 15 est agencé pour connecter le dispositif récepteur 1 à un point d'accès Wi-Fi en utilisant le mode de fonctionnement Wi-Fi ad hoc, comme cela sera décrit plus loin dans la description du procédé.

Le module DLNA 17 est agencé pour mettre en oeuvre le standard DLNA de manière à interagir, en tant que renderer DLNA, avec d'autres acteurs DLNA du réseau local 4, par l'intermédiaire de la passerelle 3. Ce module DLNA est agencé pour commander l'obtention d'un flux de données sur un serveur DLNA, son décodage et sa restitution, selon les protocoles définis par le standard DLNA.

Les modules 10, 12, 13, 16, 17 sont des modules applicatifs (ou logiciels).

Le dispositif récepteur 1 comprend en outre un câble 18 muni d'une prise d'alimentation et un module central de commande, non représenté, auquel tous les éléments du dispositif 1 sont connectés et agencé pour contrôler le fonctionnement de ces éléments.

On soulignera que le dispositif récepteur 1 est dépourvu de moyens d'interface utilisateur pour permettre à un utilisateur de sélectionner un flux à jouer.

Le dispositif de contrôle 2 est ici une tablette numérique tactile, par exemple un iPad^{©}. La tablette 2 comprend, de façon classique, un écran d'affichage tactile 20, des moyens de restitution sonore 21, un module 22 de communication sans fil, ici Wi-Fi, et un module DLNA 23. Elle est apte à décoder et jouer un flux de données (vidéo, audio, image), récupéré à travers l'Internet, sur un dispositif de stockage du réseau local 4 ou stocké dans une mémoire propre à la tablette 2.

Elle comprend en outre un module applicatif 24 d'interface utilisateur déportée pour un dispositif récepteur tel que le dispositif 1 et un module applicatif 25 d'assistance à la connexion d'un dispositif récepteur, tel que le dispositif 1, à un point d'accès Wi-Fi. Le module d'interface utilisateur 24 permet de mettre en oeuvre sur la tablette 2 une interface utilisateur GUI pour sélectionner un flux de données à jouer et pour réaliser diverses actions sur ce flux (pause, stop, avance ou retour rapide).

Le flux de données à jouer peut correspondre par exemple à un programme télévisuel diffusé par une chaîne TV, à une vidéo à la demande ou à un contenu (vidéo, audio ou image) stocké dans un dispositif du réseau local 4 (par exemple la tablette 2 ou le PC 7) ou fourni par un serveur Web. Les flux de données sont accessibles auprès de différentes sources et peuvent être sélectionnés au moyen de différentes interfaces utilisateurs. Le module d'interface 24 est agencé pour accéder à ces différentes interfaces utilisateurs de sélection et pour les afficher sur l'écran tactile de la tablette 2. Les données d'interface utilisateur de sélection peuvent être stockées localement dans la tablette 2 ou être accessibles à travers un réseau (en l'espèce l'Internet ou le réseau local 4) auprès d'un serveur ou d'un dispositif de stockage.

Dans l'exemple particulier décrit ici, le module d'interface 24 est agencé pour proposer à un utilisateur, par affichage d'une interface graphique sur l'écran de la tablette 2, différentes rubriques correspondant à différents types de flux: TV, VOD, mes contenus (vidéo, musique, image), YouTube, etc.

Dans l'exemple particulier de la description, sur sélection de l'une de ces rubriques, le module d'interface 24 est agencé pour accéder à une interface graphique utilisateur ou GUI (Graphical User Interface) de sélection et pour l'afficher sur l'écran du dispositif de contrôle 2. Cette interface peut être accessible auprès d'un serveur Web de service de télévision, d'un serveur Web de service de vidéo à la demande (VOD), d'un serveur Web de service YouTube ou d'un dispositif de stockage du réseau local 4.

L'interface GUI de sélection d'un programme TV est fournie par le serveur Web de service de télévision. Elle comprend, de façon connue, un guide électronique de programmes télévisuels permettant d'accéder à une grille des programmes de différentes chaînes de télévision et de sélectionner un programme de télévision à regarder.

L'interface GUI de sélection d'une VOD est fournie par le serveur Web de VOD. Elle comprend, de façon connue, un catalogue de VOD et un moteur de recherche par mots clés. Le catalogue de VOD et le moteur de recherche permettent d'accéder, pour chaque VOD, à une fiche détaillée d'informations et à des commandes activables, ici par un appui tactile sur l'écran 20 du dispositif de contrôle 2, pour notamment visualiser un extrait de VOD ou pour louer une VOD.

L'interface GUI de sélection du service YouTube est accessible auprès d'un serveur Web de service YouTube. Elle comprend, de façon connue, un catalogue de vidéos disponibles sur YouTube et un moteur de recherche par mots clés.

L'interface GUI de sélection de « mes contenus » (vidéo, musique, image) comprend un gestionnaire de fichiers permettant de sélectionner et de lancer la lecture de fichiers stockés sur un dispositif de stockage ici du réseau local 4, ce dispositif jouant un rôle de serveur DLNA. On pourrait envisager d'accéder à un gestionnaire de fichiers stockés sur un dispositif de stockage ou un serveur distant, externe, au réseau local et accessible par l'intermédiaire d'un réseau externe.

En outre, suite à la sélection d'un flux à jouer par un utilisateur et à une commande de l'utilisateur pour jouer ce flux sur le dispositif de restitution 6, le module 24 est agencé pour transmettre au dispositif récepteur 1 une commande « PLAY »pour jouer le flux. La commande PLAY contient l'adresse de localisation du flux à jouer, ici sous la forme d'une URL.

Le module 25 d'assistance à la connexion est agencé pour, sur réception d'une requête de connexion en provenance d'un dispositif récepteur (par exemple le dispositif 1), afficher une interface graphique utilisateur (ou interface GUI) de saisie de données de connexion à un point d'accès Wi-Fi et pour transmettre les données de connexion saisies au dispositif récepteur ayant au point d'accès Wi-Fi.

Le module DLNA 23 est agencé pour mettre en oeuvre le standard DLNA de manière à interagir, en tant que de renderer/player DLNA, de serveur DLNA ou de contrôleur DLNA, avec d'autres acteurs DLNA du réseau local 4, par l'intermédiaire de la passerelle 3. Ce module DLNA est agencé pour commander l'obtention d'un flux de données sur un serveur DLNA, son décodage et sa restitution, pour fournir des flux de données stocké dans la tablette 2, pour permettre de parcourir les contenus stockés dans la tablette et de les faire jouer par les renderers/players, selon les protocoles définis par le standard DLNA.

Le dispositif de restitution multimédia 6 est ici un téléviseur à écran plat équipé d'un connecteur HDMI femelle. Il pourrait s'agir de tout autre dispositif apte à jouer un contenu multimédia (vidéo, audio ou image).

Le PC 7 stocke des contenus multimédia (vidéo, audio, image). Il joue un rôle de serveur DLNA dans le réseau local 4.

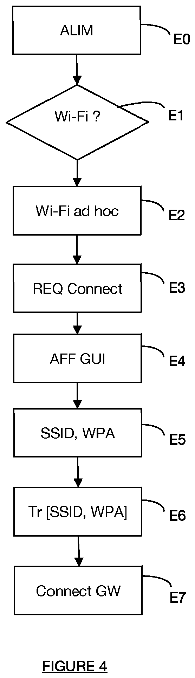

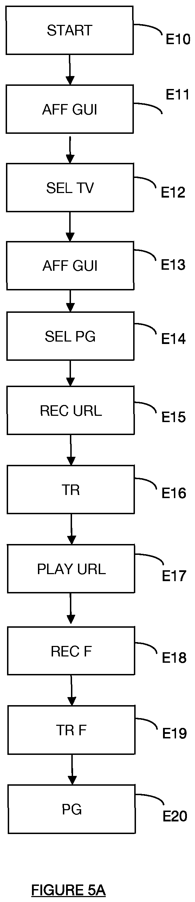

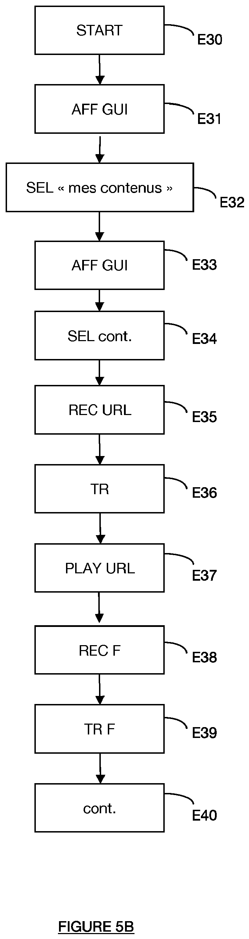

En référence aux figures 4, 5A et 5B, le fonctionnement du système de la figure 1 va maintenant être décrit.

On va d'abord décrire les étapes mises en oeuvre pour connecter le dispositif récepteur 1 à la passerelle 3, sachant que le dispositif 1 est dépourvu de moyens d'interface utilisateur pour permettre à un utilisateur de saisie des données nécessaires de connexion à la passerelle 3. Les étapes exécutées par le dispositif récepteur 1 sont mises en oeuvre par le sous-module de connexion Wi-Fi 15.

Le dispositif récepteur 1 étant dépourvu de moyens d'interface utilisateur, sa connexion à la passerelle 3 s'effectue à l'aide du dispositif de contrôle 2.

Lors d'une étape E0, un utilisateur branche le dispositif récepteur 1 au secteur afin de le mettre en marche.

Lors d'une étape de test E1, le dispositif récepteur 1 vérifie s'il est connecté à un point d'accès Wi-Fi (ou borne Wi-Fi). Aucune connexion Wi-Fi valide n'ayant encore été établie, le test est négatif. Lors d'une étape E2, le dispositif récepteur 1 se met alors en mode de fonctionnement Wi-Fi ad hoc pour établir une connexion directement avec le dispositif de contrôle 2. Le mode Wi-Fi ad hoc consiste, de façon connue, pour le dispositif récepteur 1 à simuler un point d'accès Wi-Fi avec un nom de réseau SSID (Service Set Identifier). Le dispositif de contrôle 2 se connecte au dispositif récepteur 1 directement, en mode Wi-Fi.

Lors d'une étape E3, le dispositif récepteur 1 transmet une requête de connexion à un point d'accès Wi-Fi au dispositif de contrôle 2.

Lors d'une étape E4, sur réception de la requête du dispositif récepteur 1, le dispositif de contrôle 2 affiche une interface utilisateur de saisie d'informations de connexion au point d'accès Wi-Fi local, ou passerelle, 3. L'interface de saisie invite l'utilisateur à saisir les données de connexion nécessaires pour connecter le dispositif récepteur 1 à la passerelle 3. Ces données de connexion comprennent un nom de réseau SSID et une clé de sécurité, ici une clé WPA, associés à la passerelle 3.

Lors d'une étape E5, l'utilisateur saisit les données de connexion requises (SSID et clé WPA associés à la passerelle 3) à l'aide d'un clavier, ici virtuel, du dispositif de contrôle 2 puis valide les données saisies.

Lors d'une étape E6, le dispositif de contrôle 2 transmet les informations de connexion saisies (SSID et clé WPA de la passerelle 3) au dispositif récepteur 2 qui les enregistre en mémoire.

Lors d'une étape E7, le dispositif récepteur 1 se connecte à la passerelle 3, en mode Wi-Fi, à l'aide des informations de connexion fournies par le dispositif de contrôle 2.

Une fois le dispositif récepteur 1 connecté à la passerelle 3, il interrompt le mode de fonctionnement Wi-Fi ad hoc. La connexion Wi-Fi directe entre le dispositif récepteur 1 et le dispositif de contrôle 2 est alors interrompue.

Les étapes qui viennent d'être décrites de connexion du dispositif récepteur 1 à la passerelle 3 sont mises en oeuvre à chaque fois qu'aucune connexion Wi-Fi valide à un point d'accès Wi-Fi n'est détectée, autrement dit dans les deux cas suivants :
- à la première connexion à un point d'accès Wi-Fi (comme décrit précédemment) et
- dans une nouvelle zone de couverture Wi-Fi, lorsque le dispositif récepteur 1 est déplacé dans la zone de couverture d'un nouveau point d'accès Wi-Fi (en dehors de la zone couverte par le point d'accès Wi-Fi préalablement enregistré).

Le dispositif récepteur 2 mémorise les données de connexion des différents points d'accès auquel il se connecte, afin de pouvoir s'y reconnecter automatiquement le cas échéant. Lorsque le dispositif récepteur 2 se trouve dans la zone de couverture de deux points d'accès wifi enregistrés, il se connecte au point d'accès ayant le signal radio le plus fort.

La tablette 2 se connecte également en Wi-Fi à la passerelle 3, de façon connue.

Une fois connectés en Wi-Fi à la passerelle 3, le dispositif récepteur 1 et le dispositif de contrôle 2 peuvent communiquer l'un avec l'autre par l'intermédiaire de la passerelle 3.

On va maintenant décrire les étapes mises en oeuvre par le système pour sélectionner et jouer un flux de données sur le dispositif de restitution multimédia 6, pour deux exemples de réalisation.

Dans un premier exemple de réalisation, le flux à jouer est un programme TV.

Lors d'une étape E10, un utilisateur lance sur le dispositif de contrôle 2 l'application d'interface 24 pour sélectionner un flux à jouer.

Lors d'une étape E11, le dispositif de contrôle 2 affiche une interface graphique permettant à l'utilisateur de sélectionner l'une des rubriques suivantes : TV, VOD, YouTube, mes contenus (vidéo, musique, image/photo).

Lors d'une étape E12, l'utilisateur sélectionne l'une des rubriques sur le dispositif de contrôle 1. Selon le premier exemple de réalisation, l'utilisateur sélectionne la rubrique TV. Lors d'une étape E13, le dispositif de contrôle 1 affiche sur son écran une interface de sélection de programmes TV, accessibles auprès du serveur Web de service de télévision. L'utilisateur visualise ainsi sur l'écran du dispositif de contrôle 2 la grille des programmes en cours sur différentes chaînes de télévision.

Lors d'une étape E14, l'utilisateur sélectionne l'un des programmes à l'aide du dispositif de contrôle 2, ici par une sélection tactile de ce programme sur l'écran du dispositif 2.

Lors d'une étape E15, suite à la sélection du programme, le dispositif de contrôle 2 reçoit une adresse de localisation du flux sur le réseau de l'Internet. L'adresse de localisation du flux comprend une adresse IP multicast de diffusion du programme TV sélectionné et se présente sous la forme d'une url. Sur réception de l'adresse de localisation du flux sélectionné, le dispositif de contrôle 2 récupère le flux à l'adresse reçue et joue le flux afin de permettre une prévisualisation du flux par l'utilisateur sur le dispositif de contrôle 2.

Lors d'une étape E16, l'utilisateur réalise une action spécifique, par exemple une sélection tactile d'un icône de commande ou un geste tactile prédéfini sur l'écran du dispositif de contrôle 2, pour commander un transfert de la lecture du programme TV sélectionné sur le dispositif de restitution multimédia 6. Le dispositif de contrôle 1 transmet alors au dispositif récepteur 1, lors d'une étape E17, une commande « PLAY » pour jouer le programme sélectionné. La commande contient l'adresse de localisation du flux de données de programme TV à jouer.

Lors d'une étape E18, sur réception de la commande, le dispositif récepteur 1 interprète la commande PLAY reçue et récupère le flux de programme TV sélectionné en utilisant l'adresse de localisation reçue dans la commande.

Lors d'une étape E19, le dispositif récepteur 1 reçoit le flux de programme TV, le décode et le transmet pour restitution à travers l'interface de sortie HDMI vers le dispositif de restitution multimédia 6.

Lors d'une étape E20, le dispositif de restitution multimédia 6 joue le programme TV.

Le dispositif de contrôle 2 permet également à l'utilisateur de transmettre d'autres commandes au dispositif récepteur 1, telles que notamment « PAUSE » pour mettre en pause un flux en cours de lecture, « STOP » pour un arrêt de la lecture du flux, une commande « FASTFORWARD N » pour lire en accéléré de N fois le flux, « FASTBACKFORWARD N » pour lire le flux en arrière en accéléré de N fois.

Dans un deuxième exemple de réalisation, le flux de données à jouer est un contenu vidéo stocké localement dans le PC 7. Dans cet exemple de réalisation, le PC 7 joue le rôle de serveur DLNA, le dispositif de contrôle 2 les rôles de contrôle DLNA, de renderer DLNA et de player DLNA, le dispositif récepteur 1 le rôle de renderer DLNA et le dispositif de restitution multimédia 6 le rôle de player DLNA.

Lors d'une étape E30, un utilisateur lance l'application d'interface 24 pour sélectionner un flux à jouer à partir de la tablette 2.

Lors d'une étape E31, le dispositif de contrôle 2 affiche l'interface graphique permettant à l'utilisateur de sélectionner l'une des rubriques suivantes : TV, VOD, YouTube, mes contenus (vidéos, musiques, photos).

Lors d'une étape E32, l'utilisateur sélectionne l'une des rubriques, ici mes contenus, sur le dispositif de contrôle 2.

Lors d'une étape E33, le dispositif de contrôle 2 affiche un gestionnaire de fichiers faisant apparaître une arborescence de fichiers stockés dans un ordinateur 7 et une arborescence de fichiers stockés dans le dispositif de contrôle 2.

Lors d'une étape E34, l'utilisateur sélectionne un fichier à jouer, correspondant par exemple à un contenu vidéo, à l'aide du dispositif de contrôle 2, par une sélection ici tactile du fichier sur l'écran du dispositif 2.

Lors d'une étape E35, suite à la sélection du fichier à jouer, le dispositif de contrôle 2 joue le fichier sélectionné afin de permettre à l'utilisateur de le pré-visualiser.

Lors d'une étape E36, l'utilisateur réalise une action spécifique pour commander la restitution du fichier sélectionné sur le dispositif de restitution 6. Cette action peut être une sélection tactile d'un icône affiché sur l'écran du dispositif de contrôle 2 ou un geste tactile spécifique de l'utilisateur sur l'écran du dispositif de contrôle 2.

Lors d'une étape E37, le dispositif de contrôle 2 transmet au dispositif récepteur 1 une commande DLNA pour jouer le fichier, ou flux de données, sélectionné. La commande transmise contient l'adresse de localisation du fichier sélectionné dans le réseau local DLNA. Par exemple, si l'utilisateur a sélectionné un contenu stocké sur l'ordinateur 7, la commande comporte une adresse URL pointant vers l'emplacement de stockage du fichier correspondant dans l'ordinateur 7.

Lors d'une étape E38, le dispositif récepteur 1 interprète la commande reçue et récupère le flux sélectionné par l'utilisateur auprès de l'ordinateur 7, jouant le rôle de serveur DLNA, à l'aide de l'adresse de localisation reçue.

Lors d'une étape E39, le dispositif récepteur 1 reçoit le flux de données du fichier sélectionné en streaming, c'est-à-dire en continu, le décode et le transmet pour restitution à travers l'interface de sortie HDMI vers le dispositif de restitution multimédia 6.

Lors d'une étape E40, le dispositif de restitution 6 joue le flux reçu, en l'espèce le contenu vidéo stocké sur l'ordinateur 7 faisant fonction de serveur DLNA.

La portée de l'invention n'est pas limitée aux deux exemples de réalisation décrits cidessus mais s'étend à tout flux de données, sélectionné à partir de l'interface utilisateur du dispositif de contrôle 2, et reçu par le dispositif récepteur 1 pour être joué sur une dispositif de restitution.

## Revendications

1. Système de contrôle pour jouer un flux de données comprenant :
• un premier dispositif (1), dit dispositif récepteur, comprenant :
- des moyens (10, 16) de réception du flux de données à jouer,
- des moyens (13) de transmission du flux de données reçu à travers des moyens (11) de sortie externe vers un dispositif apte à jouer le flux (6),
• un deuxième dispositif (2), dit dispositif de contrôle, distinct du dispositif récepteur (1), intégrant les moyens d'interface utilisateur (24) pour permettre à un utilisateur de sélectionner un flux de données à jouer et comprenant des moyens pour, suite à la sélection par un utilisateur d'un flux à jouer, transmettre au dispositif récepteur (1) une commande pour jouer le flux sélectionné,
ledit dispositif de contrôle (2) étant agencé pour décoder et jouer le flux sélectionné et étant distinct du dispositif apte à jouer le flux (6),
ladite commande étant transmise suite à une commande de l'utilisateur pour jouer ledit flux sur le dispositif apte à jouer le flux (6) après prévisualisation sur le dispositif de contrôle (2),
ladite commande contenant des données de localisation du flux sélectionné,
lesdits moyens d'interface utilisateur (24) étant agencés pour accéder à une interface utilisateur de sélection au moins, ladite interface de sélection permettant d'accéder à un contenu stocké sur un dispositif de stockage.

2. Système selon la revendication 1, dans lequel lesdits moyens d'interface utilisateur (24) sont agencés pour permettre à l'utilisateur de sélectionner ledit flux à jouer au moins parmi un contenu stocké sur un dispositif de stockage distant, externe au réseau local auquel appartient le dispositif récepteur (1) et accessible par l'intermédiaire d'un réseau externe (5), au moyen d'une interface utilisateur accessible auprès dudit dispositif de stockage distant, et/ou parmi un contenu stocké sur un dispositif de stockage local, situé dans le réseau local auquel appartient le dispositif récepteur (1), au moyen d'une interface utilisateur accessible auprès dudit dispositif de stockage local.

3. Système selon la revendication 1 ou 2, dans lequel
• le dispositif récepteur (1) comprend des moyens (14,15) pour établir une connexion sans fil directe avec le dispositif de contrôle (2) et recevoir des données de connexion à un point d'accès sans fil (3) et
• le dispositif de contrôle (2) comprend des moyens (25) d'assistance de connexion du dispositif récepteur (1) à un point d'accès sans fil, agencés pour afficher une interface graphique de saisie de données de connexion dispositif récepteur (1) à un point d'accès sans fil et pour transmettre lesdites données de connexion saisies au dispositif récepteur (1).

4. Système selon l'une des revendications 1 à 3, dans lequel le dispositif récepteur (1) comprend des moyens de décodage (12) agencés pour décoder le flux de données reçu.

5. Système selon l'une des revendications 1 à 4, dans lequel les moyens d'interface utilisateur pour permettre à un utilisateur de sélectionner un flux de données à jouer comprennent des moyens d'affichage de données d'interface graphique.

6. Système selon l'une des revendications 1 à 5, dans lequel lesdits moyens d'interface utilisateur pour permettre à un utilisateur de sélectionner un flux de données à jouer sont agencés pour accéder à une interface utilisateur de sélection de contenus sur un serveur distant.

7. Système selon l'une des revendications 1 à 6, dans lequel, le dispositif récepteur (1) et le dispositif de contrôle (2) appartenant à un réseau local géré par un point d'accès sans fil, lesdits moyens d'interface utilisateur pour permettre à un utilisateur de sélectionner un flux de données à jouer sont agencés pour accéder à un gestionnaire de fichiers sur un serveur de stockage du réseau local.

8. Système selon l'une des revendications 1 à 7, dans lequel le dispositif récepteur (1) est dépourvu de moyens d'interface utilisateur pour permettre à un utilisateur de sélectionner un flux de données à jouer.

9. Dispositif de contrôle (2) pour le système selon l'une des revendications 1 à 8, comprenant des moyens (24) d'interface utilisateur pour permettre à un utilisateur de sélectionner un flux de données à jouer, des moyens pour décoder et jouer le flux sélectionné et des moyens pour, suite à la sélection par un utilisateur d'un flux à jouer, à une prévisualisation sur le dispositif de contrôle du flux sélectionné et à une commande de l'utilisateur pour jouer le flux sélectionné sur un dispositif apte à jouer le flux (6), transmettre vers un autre dispositif une commande pour jouer le flux sélectionné, ladite commande contenant des données de localisation du flux sélectionné, lesdits moyens d'interface utilisateur (24) étant agencés pour accéder à une interface utilisateur de sélection au moins, ladite interface de sélection permettant d'accéder à un contenu stocké sur un dispositif de stockage.

10. Dispositif de contrôle (2) selon la revendication 9, dans lequel les moyens d'interface utilisateur pour permettre à un utilisateur de sélectionner un flux de données à jouer comprennent des moyens d'affichage de données d'interface graphique.

11. Procédé de contrôle pour jouer un flux de données, comprenant
• une étape (E14 ; E34) de sélection d'un flux de données à jouer à l'aide de moyens d'interface utilisateur (24),
• une étape (E18 ; E38) de réception du flux de données à jouer,
• une étape (E19 ; E39) de transmission du flux de données reçu vers un dispositif apte à jouer le flux (6),
• les étapes de réception d'un flux de données à jouer et de transmission du flux de données reçu vers un dispositif apte à jouer ledit flux (6) sont réalisées par un premier dispositif (1), dit dispositif récepteur ;
• l'étape de sélection d'un flux de données à jouer est réalisée par un deuxième dispositif (2), dit dispositif de contrôle, distinct du dispositif récepteur (1),
• et il est prévu une étape de transmission (E17 ; E37) par le dispositif de contrôle (2) au dispositif récepteur (1), suite à la sélection par un utilisateur d'un flux à jouer, d'une commande pour jouer le flux sélectionné, ladite commande contenant des données de localisation du flux sélectionné.
ladite commande étant transmise suite à une prévisualisation du flux sélectionné sur le dispositif de contrôle (2), distinct du dispositif apte à jouer le flux (6), et à une commande de l'utilisateur pour jouer le flux sélectionné sur le dispositif apte à jouer le flux,
ladite sélection (E14 ; E34) du flux de données à jouer étant opérée par les moyens d'interface utilisateur, lesdits moyens d'interface utilisateur (24) étant agencés pour accéder à une interface utilisateur de sélection au moins, ladite interface de sélection permettant d'accéder à un contenu stocké sur un dispositif de stockage.

12. Procédé selon la revendication 11, dans lequel
• le dispositif récepteur (1) établit (E2) une connexion sans fil directe avec le dispositif de contrôle (2) et transmet (E3) au dispositif de contrôle (2) une requête de connexion à un point d'accès sans fil ;
• le dispositif de contrôle (2) affiche (E4) une interface graphique de saisie de données de connexion du dispositif récepteur (1) à un point d'accès sans fil puis, suite à la saisie (E5) de données de connexion à un point d'accès sans fil par un utilisateur, transmet (E6) lesdites données de connexion saisies au dispositif récepteur (1).

## Patentansprüche

1. Steuersystem zum Abspielen eines Datenstroms, das enthält:
• eine erste Vorrichtung (1), Empfängervorrichtung genannt, die enthält:
- Einrichtungen (10, 16) zum Empfang des abzuspielenden Datenstroms,
- Einrichtungen (13) zur Übertragung des empfangenen Datenstroms über externe Ausgangseinrichtungen (11) zu einer zum Abspielen des Stroms geeigneten Vorrichtung (6),
• eine zweite Vorrichtung (2), Steuervorrichtung genannt, anders als die Empfängervorrichtung (1), in die die Benutzerschnittstelleneinrichtungen (24) eingebaut sind, um es einem Benutzer zu ermöglichen, einen abzuspielenden Datenstrom auszuwählen, und die Einrichtungen enthält, um nach der Auswahl eines abzuspielenden Stroms durch einen Benutzer einen Befehl zum Abspielen des ausgewählten Stroms an die Empfängervorrichtung (1) zu übertragen,
wobei die Steuervorrichtung (2) eingerichtet ist, den ausgewählten Strom zu decodieren und abzuspielen, und sich von der zum Abspielen des Stroms geeigneten Vorrichtung (6) unterscheidet,
wobei der Befehl nach einem Befehl des Benutzers zum Abspielen des Stroms auf der zum Abspielen des Stroms geeigneten Vorrichtung (6) nach Vorschau auf der Steuervorrichtung (2) übertragen wird,
wobei der Befehl Lokalisierungsdaten des ausgewählten Stroms enthält,
wobei die Benutzerschnittstelleneinrichtungen (24) eingerichtet sind, auf mindestens eine Benutzer-Auswahlschnittstelle zuzugreifen, wobei die Auswahlschnittstelle es ermöglicht, auf einen auf einer Speichervorrichtung gespeicherten Inhalt zuzugreifen.

2. System nach Anspruch 1, wobei die Benutzerschnittstelleneinrichtungen (24) eingerichtet sind, es dem Benutzer zu ermöglichen, den abzuspielenden Strom mindestens aus einem auf einer fernen Speichervorrichtung außerhalb des lokalen Netzes, zu dem die Empfängervorrichtung (1) gehört, und die über ein externes Netz (5) mittels einer zugänglichen Benutzerschnittstelle bei der fernen Speichervorrichtung zugänglich ist, gespeicherten Inhalt und/oder aus einem auf einer lokalen Speichervorrichtung, die sich im lokalen Netz befindet, zu dem die Empfängervorrichtung (1) gehört, mittels einer zugänglichen Benutzerschnittstelle bei der lokalen Speichervorrichtung gespeicherten Inhalt auszuwählen.

3. System nach Anspruch 1 oder 2, wobei
• die Empfängervorrichtung (1) Einrichtungen (14, 15) enthält, um eine direkte drahtlose Verbindung mit der Steuervorrichtung (2) aufzubauen und Verbindungsdaten zu einem drahtlosen Zugangspunkt (3) zu empfangen, und
• die Steuervorrichtung (2) Einrichtungen (25) zur Verbindungshilfe der Empfängervorrichtung (1) zu einem drahtlosen Zugangspunkt enthält, die eingerichtet sind, eine grafische Schnittstelle zur Eingabe von Empfängervorrichtung-Verbindungsdaten (1) zu einem drahtlosen Zugangspunkt anzuzeigen und die eingegebenen Verbindungsdaten an die Empfängervorrichtung (1) zu übertragen.

4. System nach einem der Ansprüche 1 bis 3, wobei die Empfängervorrichtung (1) Decodiereinrichtungen (12) enthält, die eingerichtet sind, den empfangenen Datenstrom zu decodieren.

5. System nach einem der Ansprüche 1 bis 4, wobei die Benutzerschnittstelleneinrichtungen, um es einem Benutzer zu ermöglichen, einen abzuspielenden Datenstrom auszuwählen, Einrichtungen zur Anzeige grafischer Schnittstellendaten enthalten.

6. System nach einem der Ansprüche 1 bis 5, wobei die Benutzerschnittstelleneinrichtungen, um es einem Benutzer zu ermöglichen, einen abzuspielenden Datenstrom auszuwählen, eingerichtet sind, auf eine Benutzerschnittstelle zur Auswahl von Inhalten auf einem fernen Server zuzugreifen.

7. System nach einem der Ansprüche 1 bis 6, wobei, da die Empfängervorrichtung (1) und die Steuervorrichtung (2) zu einem von einem drahtlosen Zugangspunkt verwalteten lokalen Netz gehören, die Benutzerschnittstelleeinrichtungen, um es einem Benutzer zu ermöglichen, einen abzuspielenden Datenstrom auszuwählen, eingerichtet sind, auf einen Dateimanager auf einem Speicherserver des lokalen Netzes zuzugreifen.

8. System nach einem der Ansprüche 1 bis 7, wobei die Empfängervorrichtung (1) keine Benutzerschnittstelleneinrichtungen enthält, um es einem Benutzer zu ermöglichen, einen abzuspielenden Datenstrom auszuwählen.

9. Steuervorrichtung (2) für das System nach einem der Ansprüche 1 bis 8, die Benutzerschnittstelleneinrichtungen (24), um es einem Benutzer zu ermöglichen, einen abzuspielenden Datenstrom auszuwählen, Einrichtungen, um den ausgewählten Strom zu decodieren und abzuspielen, und Einrichtungen enthält, um nach der Auswahl eines abzuspielenden Stroms durch einen Benutzer, nach einer Vorschau des ausgewählten Stroms auf der Steuervorrichtung und nach einem Befehl des Benutzers zum Abspielen des ausgewählten Stroms auf einer zum Abspielen des Stroms geeigneten Vorrichtung (6) an eine andere Vorrichtung einen Befehl zum Abspielen des ausgewählten Stroms zu übertragen, wobei der Befehl Lokalisierungsdaten des ausgewählten Stroms enthält, wobei die Benutzerschnittstelleneinrichtungen (24) eingerichtet sind, auf mindestens eine Benutzer-Auswahlschnittstelle zuzugreifen, wobei die Auswahlschnittstelle es ermöglicht, auf einen auf einer Speichervorrichtung gespeicherten Inhalt zuzugreifen.

10. Steuervorrichtung (2) nach Anspruch 9, wobei die Benutzerschnittstelleneinrichtungen Einrichtungen zur Anzeige grafischer Schnittstellendaten enthalten, um es einem Benutzer zu ermöglichen, einen abzuspielenden Datenstrom auszuwählen.

11. Steuerverfahren zum Abspielen eines Datenstroms, das enthält
• einen Schritt (E14; E34) der Auswahl eines abzuspielenden Datenstroms mit Hilfe von Benutzerschnittstelleneinrichtungen (24),
• einen Schritt (E18; E38) des Empfangs des abzuspielenden Datenstroms,
• einen Schritt (E19; E39) der Übertragung des empfangenen Datenstroms an eine zum Abspielen des Stroms geeignete Vorrichtung (6),
• wobei die Schritte des Empfangs eines abzuspielenden Datenstroms und der Übertragung des empfangenen Datenstroms an eine zum Abspielen des Stroms geeignete Vorrichtung (6) von einer ersten Vorrichtung (1), Empfängervorrichtung genannt, durchgeführt werden;
• der Schritt der Auswahl eines abzuspielenden Datenstroms von einer zweiten Vorrichtung (2), Steuervorrichtung genannt, durchgeführt wird, die sich von der Empfängervorrichtung (1) unterscheidet,
• und ein Schritt der Übertragung (E17; E37) eines Befehls zum Abspielen des ausgewählten Stroms nach der Auswahl eines abzuspielenden Stroms durch einen Benutzer von der Steuervorrichtung (2) an die Empfängervorrichtung (1) vorgesehen ist, wobei der Befehl Lokalisierungsdaten des ausgewählten Stroms enthält,
wobei der Befehl nach einer Vorschau des ausgewählten Stroms auf der Steuervorrichtung (2), die sich von der zum Abspielen des Stroms geeigneten Vorrichtung (6) unterscheidet, und nach einem Befehl des Benutzers zum Abspielen des ausgewählten Stroms auf der zum Abspielen des Stroms geeigneten Vorrichtung übertragen wird, wobei die Auswahl (E14; E34) des abzuspielenden Datenstroms von den Benutzerschnittstelleneinrichtungen durchgeführt wird, wobei die Benutzerschnittstelleneinrichtungen (24) eingerichtet sind, mindestens auf eine Benutzer-Auswahlschnittstelle zuzugreifen, wobei die Auswahlschnittstelle es ermöglicht, auf einen auf einer Speichervorrichtung gespeicherten Inhalt zuzugreifen.

12. Verfahren nach Anspruch 11, wobei
• die Empfängervorrichtung (1) eine direkte drahtlose Verbindung mit der Steuervorrichtung (2) aufbaut (E2) und eine Verbindungsanforderung mit einem drahtlosen Zugangspunkt an die Steuervorrichtung (2) überträgt (E3) ;
• die Steuervorrichtung (2) eine grafische Schnittstelle zur Eingabe von Verbindungsdaten der Empfängervorrichtung (1) mit einem drahtlosen Zugangspunkt anzeigt (E4), dann nach der Eingabe (E5) von Verbindungsdaten mit einem drahtlosen Zugangspunkt durch einen Benutzer die eingegebenen Verbindungsdaten an die Empfängervorrichtung (1) überträgt (E6) .

## Claims

1. Control system for playing a data stream comprising:
• a first device (1), called a receiving device, comprising:
- means (10, 16) for receiving the data stream to be played,
- means (13) for transmitting the received data stream through the external output means (11) to a device that is capable of playing the stream (6),
• a second device (2), called a control device, which is separate from the receiving device (1), integrating the user interface means (24) for allowing a user to select a data stream to be played and comprising means for, subsequent to the selection, by a user, of a stream to be played, transmitting to the receiving device (1) a command for playing the selected stream,
said control device (2) being designed to decode and play the selected stream and being separate from the device that is capable of playing the stream (6),
said command being transmitted subsequent to a command from the user for playing said stream on the device that is capable of playing the stream (6) after preview on the control device (2),
said command containing data for locating the selected stream,
said user interface means (24) being designed to access a selection user interface at least, said selection interface allowing a content stored on a storage device to be accessed.

2. System according to Claim 1, in which said user interface means (24) are designed to allow the user to select said stream to be played at least from among a content stored on a remote storage device, which is external to the local area network to which the receiving device (1) belongs and accessible by way of an external network (5), by means of a user interface that is accessible on said remote storage device, and/or from among a content stored on a local storage device, which is located in the local area network to which the receiving device (1) belongs, by means of a user interface that is accessible on said local storage device.

3. System according to Claim 1 or 2, in which
• the receiving device (1) comprises means (14, 15) for setting up a direct wireless connection to the control device (2) and receiving data for connection to a wireless access point (3) and
• the control device (2) comprises means (25) for assisting connection of the receiving device (1) to a wireless access point, said means being designed to display a graphical interface for inputting data for connection of the receiving device (1) to a wireless access point and to transmit said input connection data to the receiving device (1).

4. System according to one of Claims 1 to 3, in which the receiving device (1) comprises decoding means (12) designed to decode the received data stream.

5. System according to one of Claims 1 to 4, in which the user interface means for allowing a user to select a data stream to be played comprise means for displaying graphical interface data.

6. System according to one of Claims 1 to 5, in which said user interface means for allowing a user to select a data stream to be played are designed to access a user interface for selecting content on a remote server.

7. System according to one of Claims 1 to 6, in which, the receiving device (1) and the control device (2) belonging to a local area network managed by a wireless access point, said user interface means for allowing a user to select a data stream to be played are designed to access a file manager on a storage server of the local area network.

8. System according to one of Claims 1 to 7, in which the receiving device (1) is devoid of user interface means for allowing a user to select a data stream to be played.

9. Control device (2) for the system according to one of Claims 1 to 8, comprising user interface means (24) for allowing a user to select a data stream to be played, means for decoding and playing the selected stream and means for, subsequent to the selection, by a user, of a stream to be played, to a preview on the control device of the selected stream and to a command from the user for playing the selected stream on a device that is capable of playing the stream (6), transmitting to another device a command for playing the selected stream, said command containing data for locating the selected stream, said user interface means (24) being designed to access a selection user interface at least, said selection interface allowing a content stored on a storage device to be accessed.

10. Control device (2) according to Claim 9, in which the user interface means for allowing a user to select a data stream to be played comprise means for displaying graphical interface data.

11. Control method for playing a data stream, comprising
• a step (E14; E34) of selection of a data stream to be played using user interface means (24),
• a step (E18; E38) of reception of the data stream to be played,
• a step (E19; E39) of transmission of the received data stream to a device that is capable of playing the stream (6),
• the steps of reception of a data stream to be played and of transmission of the received data stream to a device that is capable of playing said stream (6) are carried out by a first device (1), called a receiving device;
• the step of selection of a data stream to be played is carried out by a second device (2), called a control device, which is separate from the receiving device (1),
• and provision is made for a step of transmission (E17; E37) by the control device (2) to the receiving device (1), subsequent to the selection, by a user, of a stream to be played, of a command for playing the selected stream, said command containing data for locating the selected stream,
said command being transmitted subsequent to a preview of the selected stream on the control device (2), which is separate from the device that is capable of playing the stream (6), and to a command from the user for playing the selected stream on the device that is capable of playing the stream,
said selection (E14; E34) of the data stream to be played being made by the user interface means, said user interface means (24) being designed to access a selection user interface at least, said selection interface allowing a content stored on a storage device to be accessed.

12. Method according to Claim 11, in which
• the receiving device (1) sets up (E2) a direct wireless connection to the control device (2) and transmits (E3) to the control device (2) a request for connection to a wireless access point;
• the control device (2) displays (E4) a graphical interface for inputting data for connection of the receiving device (1) to a wireless access point and then, subsequent to the input (E5) of data for connection to a wireless access point by a user, transmits (E6) said input connection data to the receiving device (1) .
